# EUROPÄISCHE PATENTSCHRIFT

(11) **EP 3 520 956 B1**
(45) Veröffentlichungstag und Bekanntmachung des Hinweises auf die Patenterteilung: **09.11.2022**
(21) Anmeldenummer: 19154545.8
(22) Anmeldetag: 30.01.2019
(51) Int. Cl.: B23Q 3/155

(54) **ZUFUHRVORRICHTUNG FÜR EIN WERKZEUGMAGAZIN EINER WERKZEUGMASCHINE SOWIE VERFAHREN ZUM WECHSELN EINES WERKZEUGS AN EINEM WERKZEUGMAGAZIN**
FEEDING DEVICE FOR A TOOL HOLDER OF A MACHINE TOOL AND METHOD FOR CHANGING A TOOL ON A TOOL HOLDER
DISPOSITIF D'ALIMENTATION POUR UN MAGASIN D'OUTILS D'UN MACHINE-OUTIL AINSI QUE PROCÉDÉ DE CHANGEMENT D'UN OUTIL SUR UN MAGASIN D'OUTIL

(30) Priorität: 30.01.2018 DE 102018201426
(43) Veröffentlichungstag der Anmeldung: 07.08.2019
(73) Patentinhaber: DECKEL MAHO Pfronten GmbH, 87459 Pfronten (DE)
(72) Erfinder: Mayr, Matthias, 87629 Füssen (DE); Kienberger, Axel, 87459 Pfronten (DE)
(74) Vertreter: MERH-IP Matias Erny Reichl Hoffmann Patentanwälte PartG mbB

(56) Entgegenhaltungen:
- EP-A1- 0 319 914
- EP-A2- 2 353 778
- FR-A5- 2 115 764
- JP-A- H08 187 640
- JP-A- S61 226 241
- US-A- 4 547 955

## Beschreibung

Die vorliegende Erfindung betrifft eine Vorrichtung zum Wechseln und Einlegen von Werkzeugen an einem Werkzeugmagazin einer Werkzeugmaschine sowie ein Verfahren zum Wechseln und Einlegen von Werkzeugen an einem Werkzeugmagazin der Werkzeugmaschine.

### Hintergrund

Systeme zum Wechseln und Einlegen bzw. Vorlegen von Werkzeugen an einer Werkzeugmaschine und Werkzeugmagazine zur Werkzeugbevorratung einer Werkzeugmaschine sind aus dem Stand der Technik in unterschiedlichen Ausführungsformen beschrieben. Werkzeugwechselsysteme werden beispielsweise in Fräsbearbeitungszentren eingesetzt, um die Nebenzeiten der jeweiligen Bearbeitungsmaschine, beispielsweise die sogenannten Span-zu-Span-Zeiten, zu verringern.

Mithilfe von Werkzeugwechselsystemen werden Werkzeuge bei Bedarf aus dem Werkzeugmagazin in eine Bearbeitungsspindel einer Werkzeugmaschine und umgekehrt gewechselt. Dies geschieht gegebenenfalls voll automatisiert und programmgesteuert. Die Werkzeugmagazine nehmen hierzu eine Mehrzahl von Werkzeugen zur Werkzeugbevorratung auf. Über einen Manipulator zur Entnahme der Werkzeuge aus dem Werkzeugmagazin können diese einer Werkzeugmaschine zugeführt werden.

Aus der DE 10 2004 028 151 A1 ist eine Speicheranordnung für Bearbeitungsmaschinen bekannt mit übereinander angeordneten Lagerpositionen, an deren Unterseite Werkzeughalterungen befestigt sind, die kreisförmig angeordnet sind und aus denen mittels eines beweglichen Greifarms Werkzeuge entnommen werden können. Die Entnahme der Werkzeuge erfolgt dabei in einer Richtung senkrecht zur gehalterten Werkzeugachse und nach radial innen durch den Greifarm.

Kreis- bzw. säulenartige Werkzeugmagazine können, ähnlich wie Kettenmagazine, eine hohe Anzahl von Werkzeugen lagern, bei im Vergleich zu Regalmagazinen schnelleren Zugriffszeiten auf die Werkzeuge. In der Praxis müssen dennoch oftmals Regalmagazine eingesetzt werden, wenn aufgrund des eingeschränkten Stellplatzes neben der Werkzeugmaschine nur ein Regalmagazin mit schmaler Breite eingesetzt werden kann.

EP 2 353 778 A2 , welche die Basis für den Oberbegriff des Anspruchs 1 darstellt, zeigt ein Regalmagazin zum Speichern und Ubergeben von Objekten, wobei das Regalmagazin ein Regalgrundgerüst mit einer Vielzahl an Regalfächern umfasst.

EP 0 319 914 A1 zeigt ein Magazin mit turmartig übereinander angeordnete Trägereinheiten, die mit einer zentralen Ausnehmung und innenliegenden Werkzeughalterungen versehen sind.

FR 2 115 764 A5 zeigt ein Speichersystem für Werkstücke und/oder Werkzeuge für mehrere Bearbeitungsstationen mit angeordneten Speicherplätzen.

US 4 547 955 A zeigt ein automatisches Werkzeugwechselsystem für ein NC-Bearbeitungswerkzeug, die eine Werkzeugsäule umfasst, wobei Werkzeuge zwischen einem Werkzeugmagazin und der Werkzeugsäule transportiert werden.

Bei Werkzeugmagazinen nach dem Stand der Technik tritt jedoch das Problem auf, dass beim Befüllen des Radmagazins ein manuelles Einsetzen der Werkzeuge erforderlich ist. Dabei müssen auch schwere Werkzeuge von Hand in das Werkzeugmagazin eingegeben werden. Beim Austausch oder beim Einwechseln der Werkzeuge kann zumeist die Werkzeugmaschine bzw. das Werkzeugmagazin nicht in Betrieb genommen werden, da zuerst der manuelle Auffüllvorgang des Werkzeugmagazins abgeschlossen werden muss. Ein hauptzeitparalleles Rüsten ist daher zumeist nicht möglich. Zudem müssen die Benutzer für ein Auswechseln oder Auffüllen von Werkzeugen in das Werkzeugmagazin auf die Fertigstellung des Bearbeitungsvorgangs warten. Insbesondere kann ein Auswechseln nicht bei aktiviertem Betrieb der Werkzeugmaschine durchgeführt werden. Eine Aufgabe der Erfindung ist es somit, eine Vorrichtung und ein Verfahren zum Wechseln bzw. Einlegen oder Vorlegen von Werkzeugen an einem Werkzeugmagazin (insbesondere ein rotierbares Radmagazin) bereitzustellen, bei denen die vorstehend genannten Probleme aus dem Stand der Technik gelöst werden.

Insbesondere ist es eine weitere Aufgabe der Erfindung eine verbesserte Vorrichtung zum Wechseln und Einlegen von Werkzeugen an einem Werkzeugmagazin einer Werkzeugmaschine bereitzustellen, um ein hauptzeitparalleles Rüsten zu ermöglichen.

### Zusammenfassung

Die vorstehend beschriebenen Aufgaben werden erfindungsgemäß gelöst durch eine Vorrichtung bzw. ein Verfahren nach den unabhängigen Ansprüchen. Bevorzugte Ausführungsbeispiele der Erfindung werden in den abhängigen Ansprüchen beschrieben.

Zur Lösung der Probleme wird eine erfindungsgemäße Eingabevorrichtung (Werkzeugeingabeeinheit) vorgeschlagen. Die Eingabevorrichtung für ein Werkzeugmagazin einer Werkzeugmaschine, insbesondere für ein Radmagazin einer Werkzeugmaschine umfasst einen Manipulator zum Wechseln und Einlegen von Werkzeugen am Werkzeugmagazin. Der Manipulator ist entlang einer ersten Bewegungsrichtung beweglich angeordnet und weist zumindest eine Werkzeugaufnahme auf. Bevorzugt ist diese Werkzeugaufnahme ein Greifer zum radialen Greifen von Werkzeugen aus dem Werkzeugmagazinmagazin. Eine Werkzeugbereitstellungseinheit mit einem beweglichen Werkzeugwagen und mit zumindest einem Werkzeugplatz zur Aufnahme von Werkzeugen kann zusätzlich vorgesehen sein. Der Manipulator zum Wechseln eines Werkzeugs am Werkzeugmagazin kann entlang der ersten Bewegungsrichtung, in Richtung Werkzeugbereitstellungseinheit, zu einer Übergabeposition bewegbar sein. Durch diese vorteilhafte Vorrichtung ist ein einfaches und schnelles Wechseln der Werkzeuge möglich. Die Werkzeuge können automatisch aus der Werkzeugbereitstellungseinheit entnommen werden und über den Manipulator in das Werkzeugmagazin eingewechselt werden. Somit wird ein effizientes und schnelles, bevorzugt autonomes, Nachfüllen des Werkzeugmagazins ermöglicht. Ein manuelles Heben der teilweise schweren Werkzeuge ist nicht mehr nötig, da das Einwechseln automatisch von der Eingabevorrichtung durchgeführt werden kann. Dadurch ist zudem ein hauptzeitparalleles Nachfüllen und/oder Auswechseln der Werkzeuge des Werkzeugmagazins möglich. Bevorzugt kann die Eingabevorrichtung die Art und Position der Werkzeuge in der Werkzeugbereitstellungseinheit automatisch erkennen. Zudem kann alternativ oder zusätzlich auch ein direktes Einwechseln der bereitgestellten Werkzeuge von der Werkzeugbereitstellungseinheit in die Spindel der Werkzeugmaschine durchgeführt werden.

Vorteilhaft kann der Werkzeugplatz an einer Werkzeugleiste vorliegen und zum Entnehmen eines Werkzeugs aus der Werkzeugleiste kann eine Hebevorrichtung zum Anheben der Werkzeugleiste in die Übergabeposition vorgesehen sein. Es kann somit eine Werkzeugleiste mit mehreren Werkzeugplätzen bereitgestellt werden, welche ein kompaktes Design aufweist und manuell befüllt werden kann. Diese Werkzeugleiste kann direkt der Eingabevorrichtung zugeführt werden. Die Eingabevorrichtung kann autonom die einzelnen Werkzeuge der Werkzeugleiste entnehmen oder die Werkzeugplätze mit auszutauschenden Werkzeugen des Werkzeugmagazins befüllen. Über die Hebevorrichtung entfällt zudem ein manuelles Anheben der Werkzeuge oder Werkzeugleiste, so dass das Auswechseln weiter erleichtert werden kann. Somit wird ein effizientes und schnelles Nachfüllen des Werkzeugmagazins ermöglicht.

Vorteilhaft kann zum Wechseln eines Werkzeugs der Manipulator in der Übergabeposition zumindest ein Werkzeug aus der angehobenen Werkzeugleiste entnehmen. Somit wird ein effizientes und schnelles Nachfüllen des Werkzeugmagazins ermöglicht.

Vorteilhaft kann die Hebevorrichtung ein Eingreifmittel zum Aufnehmen einer Werkzeugleiste aufweisen und das Eingreifmittel kann entlang einer Heberichtung verfahrbar sein. Über die Hebevorrichtung entfällt zudem ein manuelles Anheben der Werkzeuge oder Werkzeugleiste, so dass das Auswechseln weiter erleichtert werden kann. Somit wird ein effizientes und schnelles Nachfüllen des Werkzeugmagazins ermöglicht.

Vorteilhaft kann das Eingreifmittel der Hebevorrichtung zum Anheben entlang der Heberichtung in die Übergabeposition und zum Drehen der Werkzeugleiste von einer Ausgangsstellung in eine Übergabestellung eingerichtet sein, wobei bevorzugt ein gleichzeitiges Anheben und Drehen möglich ist. Bevorzugt kann die Werkzeugleiste von der Ausgangsposition in die Übergabeposition um 90° gedreht werden. Weiter bevorzugt kann die Übergabestellung an der Übergabeposition vorliegen. Die Ausgangstellung der Werkzeugleiste kann im Wesentlichen horizontal sein (d.h. die Längsachse der Werkzeugleiste ist horizontal) und die Übergabestellung kann im Wesentlichen vertikal sein (d.h. die Längsachse der Werkzeugleiste ist vertikal). Somit wird ein effizientes und schnelles Nachfüllen des Werkzeugmagazins ermöglicht.

Vorteilhaft kann die Werkzeugbereitstellungseinheit zumindest eine Werkzeugleiste umfassen und der Werkzeugplatz der Werkzeugleiste kann ein manuell bestückbarer Werkzeugplatz für bereitzustellende Werkzeuge sein. Bevorzugt kann die Werkzeugleiste lösbar am Werkzeugwagen fixierbar sein.

Vorteilhaft kann der Werkzeugwagen an einer Einstellposition fixierbar sein, so dass die am Werkzeugwagen vorgesehene Werkzeugleiste mit dem Eingreifmittel der Hebevorrichtung verbunden werden kann, zum Anheben der Werkzeugleiste in die Übergabeposition. Die Einstellposition kann dabei direkt bei der Hebevorrichtung angeordnet sein.

Vorteilhaft kann der Manipulator translatorisch entlang der ersten Bewegungsrichtung und translatorisch entlang einer zweiten Bewegungsrichtung beweglich sein. Die erste Bewegungsrichtung kann orthogonal zur zweiten Bewegungsrichtung verlaufen. Dies ermöglicht eine besonders kompakte und effiziente Ausgestaltung der Eingabevorrichtung, so dass ein effizientes und schnelles Nachfüllen des Werkzeugmagazins ermöglicht wird.

Vorteilhaft kann eine Bewegungsrichtung des Manipulators im Wesentlichen parallel zu der Drehachse des Werkzeugmagazins verlaufen. Weiter vorteilhaft kann die erste und zweite Bewegungsrichtung des Manipulators in einer Ebene liegen und die Heberichtung außerhalb dieser Ebene liegen. Dies ermöglicht eine besonders kompakte und effiziente Ausgestaltung der Eingabevorrichtung, so dass ein effizientes und schnelles Nachfüllen des Werkzeugmagazins ermöglicht wird.

Vorteilhaft kann der Manipulator einen ausfahrbaren Manipulatorarm aufweisen, der entlang der ersten Bewegungsrichtung ausfahrbar ist, und wobei der Manipulator entlang der zweiten Bewegungsrichtung entlang einer Verschiebeachse translatorisch beweglich ist. Vorteilhaft kann der Manipulator zusätzlich einen rotierbaren Manipulatorarm aufweisen.

Vorteilhaft kann die Werkzeugleiste sechs manuell bestückbare Werkzeugplätze aufweisen. Der Manipulator kann zusätzlich derart verfahrbar sein, um Werkzeuge der Werkzeugleiste direkt in eine Spindel der Werkzeugmaschine einzuwechseln.

Vorteilhaft kann ein Identifizierungssystem vorgesehen sein zum Identifizieren der Werkzeuge. Bevorzugt wird die Werkzeugleiste mit den Werkzeugen dazu angehoben und gedreht. Somit ist ein besonders effizientes automatisiertes Nachfüllen und Auswechseln ermöglicht, da das System eigenständig die bereitgestellten Werkzeuge identifizieren kann sowie die Positionen, in der die jeweiligen Werkzeuge vorgesehen sind, erkennt. Bevorzugt kann ein Lesen/Schreiben der Werkzeugdaten der Werkzeuge in der Übergabeposition stattfinden, vor der Entnahme des Werkzeugs aus der Werkzeugleiste.

Vorteilhaft kann das Identifizierungssystem die in der Werkezugleiste aufgenommenen Werkzeuge automatisch identifizieren, und bevorzugt kann das Identifizierungssystem einen Schreib-/Lesekopf aufweisen zum Auslesen und Bearbeiten von Werkzeugdaten von RFID-Datenträger der Werkzeuge. Vorteilhaft können die Werkzeuge gespeicherte Werkzeugdaten aufweisen und die Hebevorrichtung kann zum Lesen/Schreiben der Werkzeugdaten die Werkzeugleiste in eine vordefinierte Position anheben und/oder drehen.

Vorteilhaft kann der Manipulator zumindest einen Greifer aufweisen zum Eingreifen an einer Werkzeugschnittstelle eines Werkzeugs. Die Werkzeugaufnahme des Manipulators kann um eine Drehachse drehbar sein.

Vorteilhaft kann der Werkzeugwagen zumindest zwei Werkzeugleisten aufnehmen, welche parallel zueinander angeordnet sind. Weiter bevorzugt können vier Werkzeugleisten aufgenommen werden, wobei jeweils zwei parallel zueinander angeordnet sind.

Eine vorteilhafte Werkzeugmaschine mit einem Werkzeugmagazin, insbesondere mit einem Radmagazin kann eine Eingabevorrichtung nach einem der vorhergehenden Merkmale aufweisen.

Ein vorteilhaftes Verfahren zum Wechseln von Werkzeugen eines Werkzeugmagazins einer Werkzeugmaschine, insbesondere eines Radmagazins einer Werkzeugmaschine mittels einer Eingabevorrichtung nach einem der vorhergehenden Merkmale kann die Schritte umfassen: Bewegen der Werkzeugleiste aus der Werkzeugbereitstellungseinheit in eine Übergabeposition; Eingabe oder Entnahme eines Werkzeugs aus der in der Übergabeposition befindlichen Werkzeugleiste durch den Manipulator; Bewegen des Manipulators entlang der ersten Bewegungsrichtung zum Ein-/Auswechseln des Werkzeugs in das Werkzeugmagazin.

Das Verfahren kann vorteilhaft zudem die Schritte umfassen: Anheben oder Absenken der Werkzeugleiste mit dem zumindest einen einzuwechselnden Werkzeug entlang der Heberichtung; Entnahme eines Werkzeugs aus der angehobenen und gedrehten Werkzeugleiste durch den Manipulator; Translation des entnommenen Werkzeugs mit dem Manipulator entlang der ersten Bewegungsrichtung; Einwechslung des entnommenen Werkzeugs in das Werkzeugmagazin.

Das Verfahren kann vorteilhaft zudem den Schritt umfassen: Drehung der entlang der Heberichtung angehobenen Werkzeugleiste um eine Drehachse.

Das Verfahren kann vorteilhaft zudem den Schritt umfassen: Identifikation des einzuwechselnden Werkzeugs über ein Identifikationssystem.

Eine vorteilhafte Eingabevorrichtung für ein rotierbares Werkzeugmagazin einer Werkzeugmaschine, insbesondere für ein rotierbares Radmagazin einer Werkzeugmaschine kann einen Manipulator zur Entnahme von Werkzeugen aus dem Werkzeugmagazin entlang eines Werkzeugentnahmewegs umfassen. Es ist bevorzugt eine Werkzeugbereitstellungseinheit zur Bereitstellung von Werkzeugen vorgesehen, wobei der Werkzeugentnahmeweg eine Werkzeugposition am Werkzeugmagazin und die Werkzeugeingabeeinheit verbindet und der Manipulator zum Wechseln und/oder Einlegen von Werkzeugen derart ansteuerbar ist, dass ein an der Werkzeugeingabeeinheit bereitgestelltes Werkzeug zumindest teilweise durch den Manipulator entlang des Werkzeugentnahmewegs bewegbar ist und das bereitgestellte Werkzeug durch den Manipulator in das Werkzeugmagazin (oder die Spindel) einwechselbar ist. Zumindest eine Bewegungsrichtung, entlang der das Werkzeug durch den Manipulator bewegbar ist, verläuft axial entlang des rotierbaren Werkzeugmagazins. Der Manipulator kann zum Wechseln von Werkzeugen am Werkzeugmagazin entlang der ersten und einer zweiten Bewegungsrichtung bewegbar sein, welche auf dem Werkzeugentnahmeweg liegt, und wobei bevorzugt die erste Bewegungsrichtung orthogonal zur zweiten Bewegungsrichtung ist. Der Manipulator der Zufuhrvorrichtung kann zudem derart verfahrbar sein, um direkt die Spindel der Werkzeugmaschine zu bestücken.

Der Werkzeugentnahmeweg kann zumindest mehrere direkt aneinander grenzende Abschnitte aufweisen, und dabei kann ein erster Abschnitt entlang der Heberichtung, ein zweiter Abschnitt entlang einer Verschieberichtung und ein dritter Abschnitt entlang einer Manipulatorachse verlaufen. Im ersten Abschnitt wird die Werkzeugleiste angehoben, bis zu einer Übergabeposition. Der daran angrenzende zweite Abschnitt ist ein linearer Verschiebungsbereich, entlang dessen der Manipulator nach Aufnahme des Werkzeugs an der Übergabeposition linear bewegt werden kann. Der an den zweiten Abschnitt angrenzende dritte Abschnitt umfasst einen weiteren linearen Bewegungsbereich, in dem der Manipulatorarm ausgefahren wird, hin zum Werkzeugmagazin mit anschließender Einwechselbewegung in das Werkzeugmagazin. Vorteilhaft kann beim Übergang vom ersten Abschnitt zum zweiten Abschnitt zumindest eine Drehbewegung durch die Hebevorrichtung durchgeführt werden.

Eine vorteilhafte Zufuhrvorrichtung (Eingabevorrichtung) für ein rotierbares Werkzeugmagazin einer Werkzeugmaschine kann einen Manipulator zum Wechseln und Einlegen von Werkzeugen am Werkzeugmagazin umfassen. Der Manipulator ist entlang einer ersten Bewegungsrichtung beweglich angeordnet und zumindest eine bewegliche Werkzeugaufnahme ist am Manipulator vorgesehen. Eine Werkzeugeingabeeinheit mit mehreren gleichmäßig angeordneten Werkzeugaufnahmepositionen entlang einer Werkzeugleiste für in das Werkzeugmagazin einzuwechselnde und/oder auszuwechselnde Werkzeuge ist bereitgestellt. Der Manipulator kann zum Wechseln und Einlegen von Werkzeugen am Werkzeugmagazin entlang der ersten Bewegungsrichtung linear bewegt werden und in eine angehobene Werkzeugleiste eingreifen, um ein Werkzeug zu entnehmen oder einzufügen. Die Werkzeugaufnahmepositionen weisen jeweils eine Aufnahmebohrung auf.

Die Zufuhrvorrichtung kann vorteilhaft eine Hebevorrichtung aufweisen zum Anheben und Zuführen von Werkzeugen der Werkzeugeingabeeinheit zum Manipulator an einer Übergabeposition, welche sich über der Ausgangsposition der Werkzeugeingabeeinheit befindet. Die Hebevorrichtung kann ein Eingreifmittel zum Aufnehmen einer Werkzeugleiste aufweisen, und das Eingreifmittel kann entlang einer Heberichtung verfahrbar sein, wobei die Heberichtung im Wesentlichen vertikal verläuft.

Die Werkzeugeingabeeinheit kann zumindest eine Werkzeugleiste mit manuell bestückbaren Werkzeugaufnahmepositionen für bereitzustellende Werkzeuge umfassen, wobei die Werkzeugleiste bevorzugt sechs manuell bestückbare Werkzeugaufnahmepositionen aufweist. Die Werkzeugeingabeeinheit kann einen manuell verschiebbaren Wagen (Werkzeugwagen) umfassen.

Der Manipulator kann zum Wechseln und Einlegen eines Werkzeugs in das Werkzeugmagazin der Werkzeugmaschine derart angesteuert sein, dass ein in der Werkzeug-eingabeeinheit bereitgestelltes Werkzeug durch den Manipulator festgehalten wird und entlang der ersten Bewegungsrichtung linear bewegt wird.

Der Manipulator kann zumindest einen, bevorzugt zwei, Greifer aufweisen zum Eingreifen an einer Werkzeugschnittstelle eines Werkzeugs. Die bewegliche Werkzeugaufnahme des Manipulators kann um eine Drehachse drehbar sein. Der Manipulator kann vorteilhaft mit einer radialen Greifbewegung ein Werkzeug aus dem Werkzeugmagazin entnehmen.

Die Hebevorrichtung kann vorteilhaft derart eingerichtet ist, dass die aufgenommene Werkzeugleiste um einen Drehwinkel drehbar ist, und wobei der Drehwinkel bevorzugt größer 45° und kleiner 180° ist.

Eine Zufuhrvorrichtung für ein rotierbares Werkzeugmagazin einer Werkzeugmaschine umfasst einen Manipulator und eine Werkzeugeingabeeinheit. Der Manipulator zum Wechseln und Einlegen von Werkzeugen am Werkzeugmagazin kann entlang einer ersten Bewegungsrichtung beweglich angeordnet sein und zumindest eine bewegliche Werkzeugaufnahme aufweisen. Die Werkzeugeingabeeinheit mit Werkzeugaufnahmepositionen für in das Rad einzuwechselnde und/oder auszuwechselnde Werkzeuge kann beabstandet vom rotierbaren Werkzeugmagazin angeordnet sein. Der Manipulator zum Wechseln und Einlegen von Werkzeugen am Werkzeugmagazin kann entlang der ersten Bewegungsrichtung bewegt werden zum Einwechseln oder Auswechseln der Werkzeuge.

### Kurzbeschreibung der Figuren

- **Figur 1:**: zeigt eine Überblickansicht der Zufuhrvorrichtung für ein rotierbares Radmagazin einer Werkzeugmaschine;
- **Figur 2:**: zeigt eine Werkzeugeingabeeinheit mit zwei Werkzeugleisten;
- **Figur 3:**: zeigt die Werkzeugeingabeeinheit, die Verschiebevorrichtung und den Manipulator im Bereich des Radmagazins der Werkzeugmaschine;
- **Figur 4:**: zeigt ein Anheben einer Werkzeugleiste durch die Hebevorrichtung;
- **Figur 5:**: zeigt die Hebevorrichtung mit einer angehobenen Werkzeugleiste, welche gedreht wird;
- **Figur 6:**: zeigt die angehobene und gedrehte Werkzeugleiste an der Hebevorrichtung;
- **Figur 7:**: zeigt die angehobene Werkzeugleiste in einer oberen Endposition der Hebevorrichtung;
- **Figur 8:**: zeigt den Manipulator beim Entnehmen eines Werkzeugs aus der angehobenen Werkzeugleiste;
- **Figur 9:**: zeigt den Manipulator mit einem aufgenommenen Werkzeug beim Verfahren entlang der Verfahrachse des Manipulators;
- **Figur 10:**: zeige eine Werkzeugleiste mit eingefügten Werkzeugen;
- **Figur 11:**: zeigt Werkzeugleisten, welche auf dem Werkzeugwagen vorgesehen sind.

### Detaillierte Beschreibung

Im Folgenden werden Beispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen. Es sei hervorgehoben, dass die vorliegende Erfindung jedoch in keiner Weise auf die im Folgenden beschriebenen Ausführungsbeispiele und deren Ausführungsmerkmale begrenzet bzw. eingeschränkt ist, sondern weiterhin Modifikationen der Ausführungsbeispiele umfasst, insbesondere diejenigen, die durch Modifikationen der Merkmale der beschriebenen Beispiele im Rahmen des Schutzumfanges des unabhängigen Anspruchs umfasst sind.

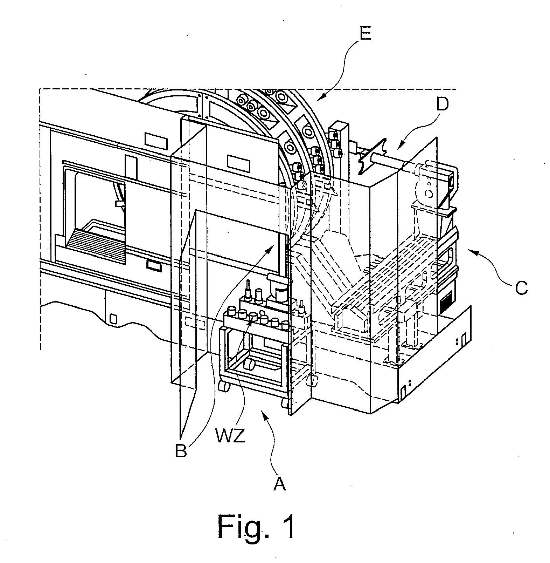

Figur 1 zeigt beispielhaft ein Radmagazin als Werkzeugmagazin für eine Werkzeugmaschine. Das Radmagazin E hat eine Vielzahl von Werkzeugaufnahmen, welche mit Werkzeugen bestückt werden. Zudem weist das Radmagazin Freiplätze auf. Das Radmagazin ist an verschiedenen Endpunkten gelagert und drehbar ausgestaltet. Die Rotation des Radmagazins erfolgt beispielsweise über einen Kettenantrieb.

Die im Radmagazin angeordneten Werkzeuge sind an einem Längsende am äußeren Umfang des Radmagazins befestigt, so dass die Werkzeuge in radialer Richtung vom Außenumfang des Radmagazins nach außen strahlenförmig abstehen. Bevorzugt sind Werkzeuge in Werkzeugaufnahmen angeordnet, wobei ein selbsthaltender Hohlschaftkegel mit Plananlage (HSK) als Schnittstelle verwendet wird (in den Figuren nicht dargestellt). Alternative kann auch ein Stahlkegel oder Morsekegel eingesetzt werden. Die Werkzeuge sind an einem Endpunkt entlang des Umfangs des Radmagazins gehaltert. Entlang des Umfangs des Radmagazins sind Werkzeugaufnahmen vorgesehen, die eine lösbare Verbindung mit den Werkzeugen eingehen können. Bevorzugt werden die Werkzeuge in den Aufnahmen aufgrund der Flieh-oder Gravitationskraft verriegelt. Das dargestellte Radmagazin E umfasst mehrere parallel zueinander angeordnete Radmagazine, welche um eine Drehachse drehbar gelagert sind. Das Werkzeugmagazin kann wahlweise mit einem oder mehreren Radmagazinen E ausgestaltet sein. Jedes Radmagazin kann über einen eigenen Antrieb verfügen, der eine Drehbewegung des Radmagazins um die gemeinsame Drehachse bewirkt. Jedes Radmagazin kann daher unabhängig von den anderen Radmagazinen antreibbar sein, um das jeweilige Radmagazin in eine gewünschte Drehposition zu bringen, so dass das benötigte Werkzeug von dem Manipulator D entnommen oder ausgetauscht werden kann.

Ein solches Radmagazin ist beispielsweise aus der DE 10 2011 082 050 A1 bekannt, deren Gegenstand hiermit als mit aufgenommen gilt. Das in Figur 1 dargestellte Werkzeugmagazin mit den Radmagazinen E weist verschiedene vorgehaltene Werkzeuge auf, welche über den Manipulator D aus dem jeweiligen Radmagazin E entnommen werden können, um durch den Manipulator D in die Spindel der Werkzeugmaschine eingewechselt zu werden. Ist es nun nötig Werkzeuge im Werkzeugmagazin auszuwechseln, oder das Werkzeugmagazin teilweise oder vollständig neu zu bestücken, so wurde dazu das Werkzeugmagazin angehalten, so dass ein manuelles Austauschen der einzelnen Werkzeuge möglich wurde. Gemäß der vorliegenden Erfindung ist es nun möglich, ein Austauschen oder Bestücken des Werkzeugmagazins zu vereinfachen und die Effizienz des gesamten Systems einschließlich der Bearbeitungszeiten der Werkzeugmaschine zu verbessern. Insbesondere kann durch die vorgeschlagene Zufuhrvorrichtung für auszutauschende Werkzeuge ein Bestücken oder Austauschen von Werkzeugen des Werkzeugmagazins auch während der Bearbeitung, also während des Betriebs der Werkzeugmaschine, ermöglicht werden. Dazu ist insbesondere der Manipulator D auf einer Verschiebevorrichtung C vorgesehen, welche sich bevorzugt parallel zur Drehachse des Radmagazins E befindet. Diese Verschiebevorrichtung C, wie in Figur 1 dargestellt, ermöglicht eine Bewegung des Manipulators D entlang einer Verschiebeachse bis zu einem Bereich, in dem die Hebevorrichtung B mit der Werkzeugeingabeeinheit A angeordnet ist.

Die Werkzeugeingabeeinheit A (auch als Werkzeugbereitstellungseinheit bezeichnet) kann beispielsweise ein Werkzeugwagen sein, auf dem über Werkzeugleisten die auszutauschenden oder auszuwechselnden Werkzeuge WZ eingefügt sind. Zudem kann die Werkzeugeingabeeinheit einen schließbaren Raum bilden in dem der Werkzeugwagen fixiert werden kann, sodass ein sicheres und einfaches Andocken der Hebevorrichtung an die Werkzeugleiste möglich ist. Das Werkzeug WZ, welches in jeweiligen Leisten vorgesehen ist, kann über die Hebevorrichtung B zu einem Übergabebereich geführt werden, in dem der verschobene Manipulator D das jeweilige Werkzeug WZ aufnehmen kann, um dies dem Radmagazin E des Werkzeugmagazins an der gewünschten Stelle zuzuführen. Auf diese Weise ist es auch möglich, auszutauschende Werkzeuge aus dem Radmagazin E des Werkzeugmagazins über den Manipulator D in den Übergabebereich zu befördern, um dieses Werkzeug wiederum der Werkzeugleiste hinzuzufügen. Über die Hebevorrichtung B kann wiederum die Werkzeugleiste der Werkzeugeingabeeinheit A eingegeben werden. Somit wird hier ein automatisiertes, einfaches und schnelles Austauschen und Auswechseln von verschiedenen Werkzeugen direkt aus dem Werkzeugmagazin ermöglicht. Ein manuelles Auswechseln der einzelnen Werkzeuge aus dem Radmagazin ist somit überflüssig. Insbesondere ist auf einfache Weise möglich, die verschiedenen Werkzeugpositionen der Werkzeugeingabeeinheit A mit neuen und beispielsweise gewarteten Werkzeugen zu bestücken und diese Werkzeugeingabeeinheit A an die vorgesehene Eingabeposition zu bringen, so dass ein automatisches Austauschen und Einwechseln der verschiedenen Werkzeuge durch die Zufuhrvorrichtung auf einfache Weise ermöglicht wird. Diese Konfiguration ermöglicht ein hauptzeitparalleles Rüsten. Über die Werkzeugleisten mit den Werkzeugen WZ ist es bevorzugt möglich, die Eingabe und Entnahme von bis zu sechs Werkzeugen gleichzeitig durchzuführen. Besonders schwere Werkzeuge müssen zudem nicht mehr von Hand in das jeweilige Radmagazin E eingegeben werden, sondern es reicht aus, wenn die jeweiligen Werkzeuge an der Werkzeugleiste über den Werkzeugwagen der Werkzeugeingabeeinheit A zugeführt werden.

Besonders vorteilhaft ist es möglich, die Zufuhrvorrichtung derart zu konfigurieren, dass diese selbständig in Abhängigkeit von der Bearbeitungsdauer und den Bearbeitungsschritten, welche von der Werkzeugmaschine auszuführen sind, entscheidet, wann verschiedene Werkzeuge in das Werkzeugmagazin einzuwechseln sind, so dass eine besonders zeiteffiziente Eingabe von Werkzeugen in das Werkzeugmagazin ermöglicht wird. Zudem muss der Benutzer der Werkzeugmaschine beim Austausch von Werkzeugen WZ für das Radmagazin E nicht auf die Maschine warten, da er sofort über die Werkzeugeingabeeinheit A die neuen Werkzeuge der Maschine zuführen kann, so dass die Maschine selbständig bei Bedarf die neuen Werkzeuge einwechselt bzw. austauschen kann.

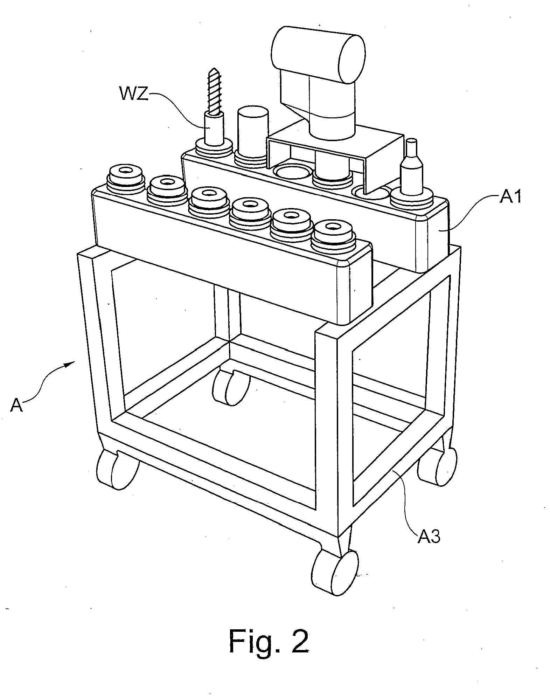

Figur 2 ist eine Detailansicht der Werkzeugeingabeeinheit A. Diese besteht beispielsweise aus einem Werkzeugwagen A3, welcher über Räder auf einfache Weise verschiebbar angeordnet ist. Dem Benutzer ist es somit möglich, auch schwere Werkzeuge an die gewünschte Stelle zu transportieren, ohne dass die gesamten Werkzeuge dabei angehoben werden müssen. Der Werkzeugwagen A3 umfasst Befestigungsmittel, welche eine lösbare Verbindung mit den verschiedenen Werkzeugleisten A1 ermöglicht. Diese Werkzeugleisten A1 weisen Aufnahmeplätze für Werkzeuge auf, wobei bevorzugt sechs Aufnahmeplätze pro Werkzeugleiste A1 vorgesehen sind. In die einzelnen Aufnahmeplätze werden die einzelnen Werkzeuge WZ bevorzugt mit den einzelnen Werkzeugschnittstellen eingefügt, so dass diese Werkzeuge WZ über den Manipulator aus der einzelnen Werkzeugleiste A1 entnommen werden können, um der Werkzeugmaschine direkt in die Spindel zugeführt zu werden oder direkt dem Werkzeugmagazin zugeführt zu werden.

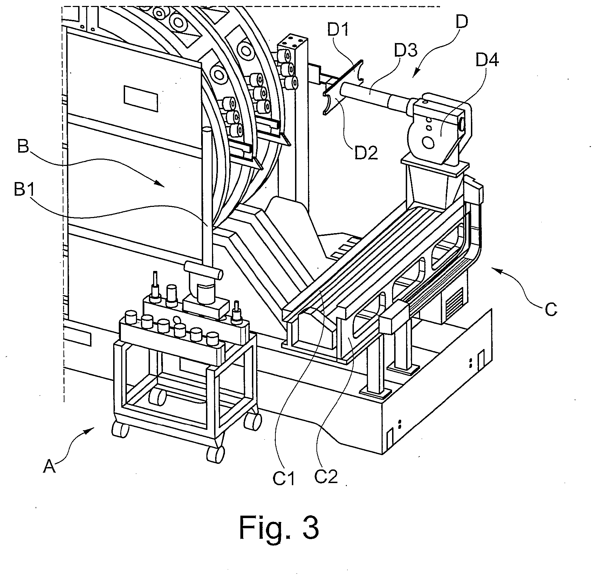

Wie in Figur 2 dargestellt, weist der Werkzeugwagen A3 Befestigungsmittel auf, welche die Aufnahme von zwei Werkzeugleisten ermöglichen. Die Werkzeuge WZ werden im Einstellraum eingemessen und die Daten werden auf einem Werkzeugidentifikationschip gespeichert. Wird der Werkzeugwagen A3 nun an der vorgesehenen Stelle an der Werkzeugmaschine, wie in Figur 3 dargestellt, positioniert, so ist es der Werkzeugmaschine bzw. der Zufuhrvorrichtung möglich, über diese Werkzeugidentifikationschips die Daten der einzelnen Werkzeuge sowie die Position der einzelnen Werkzeuge automatisch zu erfassen, so dass ein autonomes Entnehmen der einzelnen Werkzeuge ermöglicht werden kann.

Wie in Figur 3 dargestellt, wird der Werkzeugwagen A3 an einer Zufuhrposition positioniert, so dass ein Eingreifen mit der Hebevorrichtung B ermöglicht wird. Die Hebevorrichtung B weist eine Heberichtung B1 auf, entlang welcher die einzelnen Werkzeugleisten A1 angehoben werden können. Bevorzugt wird der Werkzeugwagen an der vorgesehenen Stelle fixiert, um ein erleichtertes Entnehmen durch die Hebevorrichtung B zu ermöglichen.

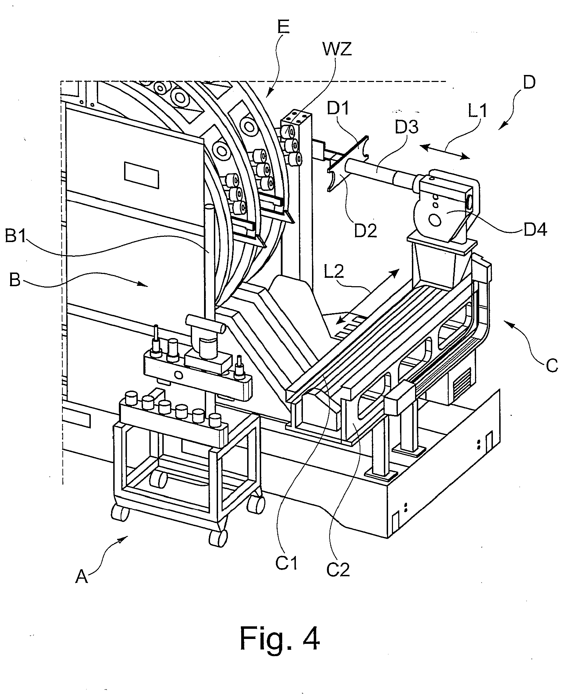

In Figur 4 ist die Werkzeugleiste A1 in einem angehobenen Zustand dargestellt. Die Werkzeugleiste A2 ist nach wie vor im Werkzeugwagen A3 der Werkzeugeingabeeinheit A positioniert. Der Werkzeugwagen A3 ist dabei direkt im Aufnahmebereich fixiert. Die Werkzeugleiste A1 wird durch die Hebevorrichtung entlang der Hebeachse B1 angehoben, um ein Kontaktieren mit dem Manipulator D bzw. eine Übergabe des Werkzeugs an den Manipulator D zu ermöglichen. Der Manipulator D weist einen Manipulatorarm D3 auf, an dessen erstem Ende ein erster Greifer D1 und ein zweiter Greifer D2 vorgesehen sind. Am gegenüberliegenden zweiten Ende des Manipulatorarms D3 ist die Manipulatoraufnahme D4 vorgesehen, welche eine weitere Bewegungsachse des Manipulators D festlegen kann. Der Manipulator D ist zur Entnahme der Werkzeuge im gezeigten Ausführungsbeispiel als Schwertwechsler mit Doppelgreifer ausgebildet, mit einem ersten Greifer D1 und einem zweiten Greifer D2. Der Doppelgreifer ermöglicht die gleichzeitige Aufnahme des zuletzt genutzten Werkzeugs und des nachfolgend benötigten Werkzeugs, so dass der Werkzeugtausch mit nur einer Horizontalbewegung des Manipulators zwischen Spindel und Werkzeugmagazin möglich ist.

Der Manipulator D ist am äußeren Umfang des Radmagazins E angeordnet, wobei der Manipulator entlang einer ersten Linearachse L1 beweglich ist, so dass der Manipulatorarm D3 ein- und ausfahrbar ausgestaltet ist. Mit anderen Worten ist der Manipulator D derart ausgestaltet, dass die Position des ersten Greifers D1 und zweiten Greifers D2 relativ zur Manipulatoraufnahme D4 verlängert oder verkürzt werden kann. Somit ist ein Ausfahren bzw. ein Einfahren des Manipulatorarms D3 entlang der Linearachse L1 möglich. Zudem können der erste und zweite Greifer D1, D2 rotatorisch bewegt werden. Insbesondere können die Greifer um eine Rotationsachse gedreht werden, welche sich entlang des Manipulatorarms D3 erstreckt. Ein Drehen bzw. Schwenken des ersten Greifers D1 und zweiten Greifers D2 wird dadurch ermöglicht. Zusätzlich ist der Manipulator D entlang der zweiten Linearachse L2 beweglich, so dass eine Verschiebung des Manipulators D entlang der Verschiebeachse C1 ermöglicht wird. Dazu ist die Verschiebevorrichtung C vorgesehen, welche den Basiskörper C2 aufweist. Der Basiskörper C2 weist bevorzugt Schienen auf sowie einen Kettenantrieb, so dass die Manipulatoraufnahme D4 mit dem Manipulator D linear entlang der zweiten Linearachse L2 bewegt werden kann. In einer weiteren Ausgestaltung kann bevorzugt der Manipulator D eine weitere Bewegungsachse aufweisen, welche eine Drehung um die Manipulatoraufnahme D4 ermöglicht.

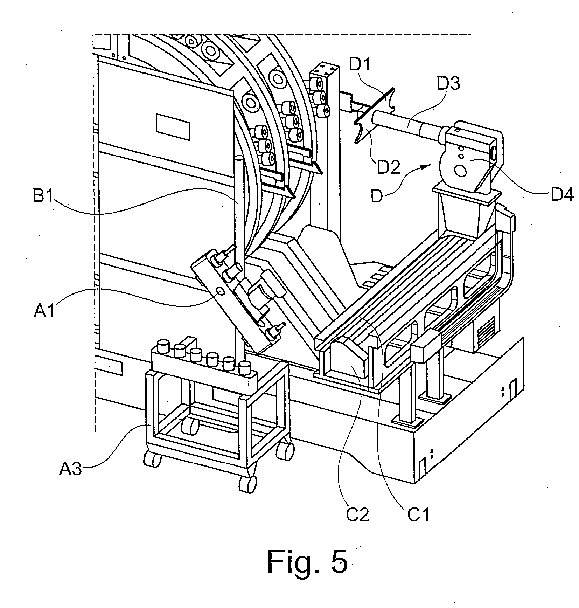

In Figur 5 ist die Zufuhrvorrichtung für das rotierbare Radmagazin E dargestellt, wobei die Werkzeugleiste A1 von der horizontalen Ausgangsposition in eine vertikale Zielposition gedreht wird. Die Werkzeugleiste A1 wird in die vertikale Position gedreht, so dass der Manipulator D mit den Greifarmen D1 und D2 ein oder zwei Werkzeuge entnehmen kann. Die Werkzeugleiste A1 wird über die Hebevorrichtung B entlang der Heberichtung B1 angehoben und um bevorzugt 90° gedreht. Die Werkzeuge haben nach der Drehung die Orientierung, um direkt von den Greifern des Manipulators D entnommen zu werden. Bevorzugt ist die Hebevorrichtung B derart ausgestaltet, dass das Anheben der Werkzeugleiste A1 gleichzeitig mit der Drehung der Werkzeugleiste von der Horizontalen in die Vertikale einhergeht. Somit finden bevorzugt zwei parallele Bewegungsabläufe statt.

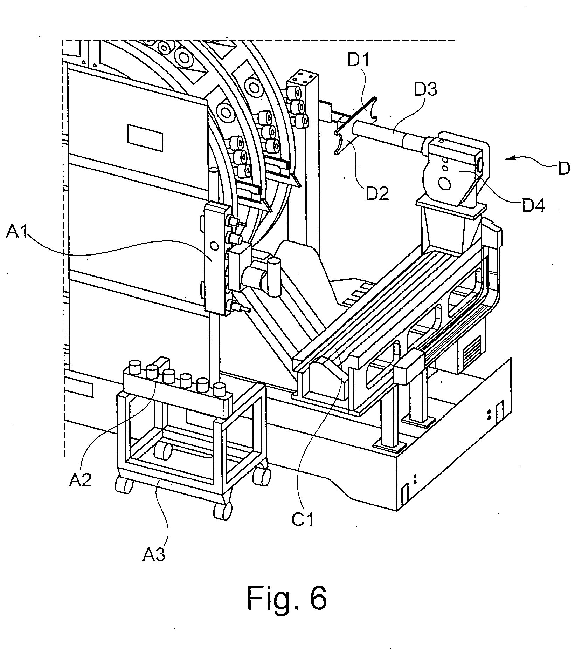

In Figur 6 ist die obere Position der Hebevorrichtung B dargestellt mit der Werkzeugleiste A1 in der vertikalen Stellung. In der vertikalen Stellung können die Werkzeuge WZ der Werkzeugleiste A1 direkt von den Greifern D1, D2 des Manipulators D entnommen werden.

Zum Entnehmen des Werkzeugs WZ aus der Werkzeugleiste A1 wird der Manipulator D entlang der Verschiebeachse C1 bewegt. Dazu wird die Verschiebevorrichtung C aktiviert, welche die Linearbewegung des Manipulators D parallel zur Drehachse der Radmagazine E ermöglicht.

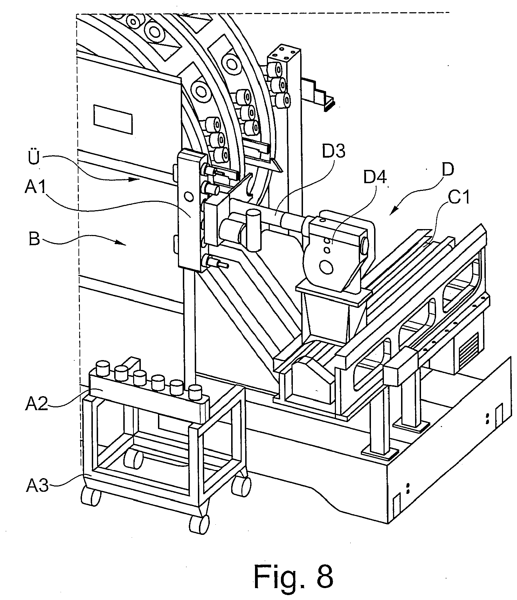

In Figur 8 ist die Entnahme eines Werkzeugs WZ aus der Werkzeugleiste A1 dargestellt, wobei ein Greifer des Manipulators D an der Werkzeugschnittstelle eingreift, um das Werkzeug aus der Werkzeugleiste A1 zu entriegeln und zu entnehmen. Die Position des Manipulators und der Werkzeugleiste A1 ist dabei die sogenannte Übergabeposition Ü. Für eine Werkzeugübergabe muss somit sowohl der Manipulator D als auch die Werkzeugleiste A1 (mithilfe der Hebevorrichtung B, welche die Werkzeugleiste dreht und anhebt) in die Übergabeposition Ü bewegt werden.

Die Zufuhrvorrichtung ist bevorzugt derart eingerichtet, dass ein automatisches Erkennen der einzelnen Werkzeuge, welche in der Werkzeugleiste A1 angeordnet sind, ermöglicht wird. Insbesondere werden Werkzeuge, welche in verschiedenen Steckplätzen der Werkzeugleiste A1 vorgesehen sind, automatisch erkannt. Beispielsweise kann über den vorgesehenen Werkzeugidentifikationschip der einzelnen Werkzeuge oder über einen Identifikationschip der Werkzeugleiste die Identifikation der aufgenommenen Werkzeuge der Werkzeugleiste A1, A2 ermöglicht werden. Beispielsweise kann dazu die Hebevorrichtung B derart ausgestaltet sein, dass berührungslos oder über Berührung mit der Werkzeugleiste und/oder den Werkzeugen ein Identifizieren und Übertragen von Werkzeugdaten ermöglicht wird. Die Werkzeugleiste kann mit der Hebevorrichtung B entlang der Heberichtung B1 verfahren werden, wobei gleichzeitig ein Lesen und Schreiben der Werkzeugdaten ermöglicht wird. Die Zufuhrvorrichtung ermöglicht somit eine automatische Werkzeugidentifikation. Abhängig von dem zu entnehmenden Werkzeug bzw. von der gewünschten Position in der Werkzeugleiste kann diese entlang der Heberichtung B1 vertikal nach oben oder nach unten verschoben werden, um eine gewünschte Entnahmeposition einzustellen. Wird beispielsweise ein Werkzeug benötigt, welches im untersten Aufnahmeplatz der Werkzeugleiste A1 liegt, in der vertikalen Ausrichtung der Werkzeugleiste A1, wie in Figur 8 dargestellt, benötigt, so kann die Werkzeugleiste A1 entlang der Heberichtung B1 weiter vertikal nach oben verschoben werden, so dass der Manipulator D durch lineare Verschiebung direkt mit dem jeweiligen Greifer die Werkzeugschnittstelle des zu entnehmenden Werkzeugs kontaktieren kann. Wird hingegen ein Werkzeug an der obersten Werkzeugposition der vertikalen Werkzeugleiste A1 in Figur 8 benötigt, so kann die Werkzeugleiste A1 vertikal nach unten verschoben werden, so weit, bis das zu entnehmende Werkzeug auf einer (insbesondere horizontalen) Ebene mit dem Greifer des Manipulators D liegt.

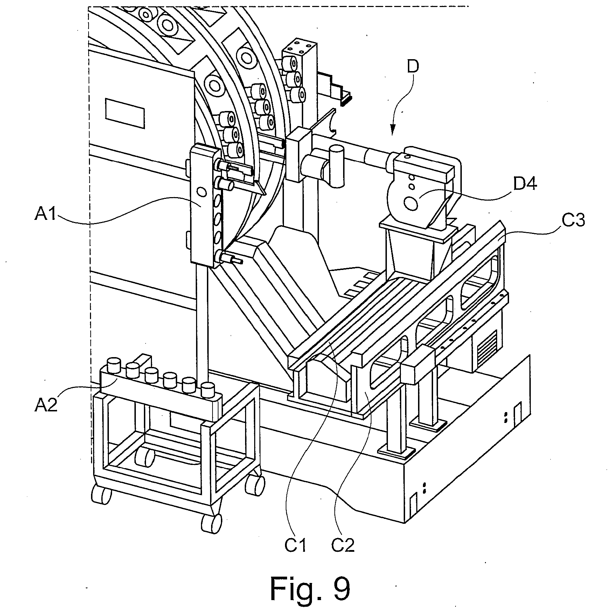

In Figur 9 ist der Manipulator D dargestellt, welcher ein Werkzeug aufgenommen hat, welches aus der Werkzeugleiste A1 entnommen wurde. Der Manipulator D wird entlang der Verschiebeachse C1 bewegt am Basiskörper C2. Das entnommene Werkzeug WZ kann vom Manipulator D direkt in das Radmagazin E eingewechselt werden oder direkt in die Spindel der Werkzeugmaschine eingewechselt werden. Nach Entnahme aller Werkzeuge aus der Werkzeugleiste A1 wird diese wieder im Werkzeugwagen abgelegt.

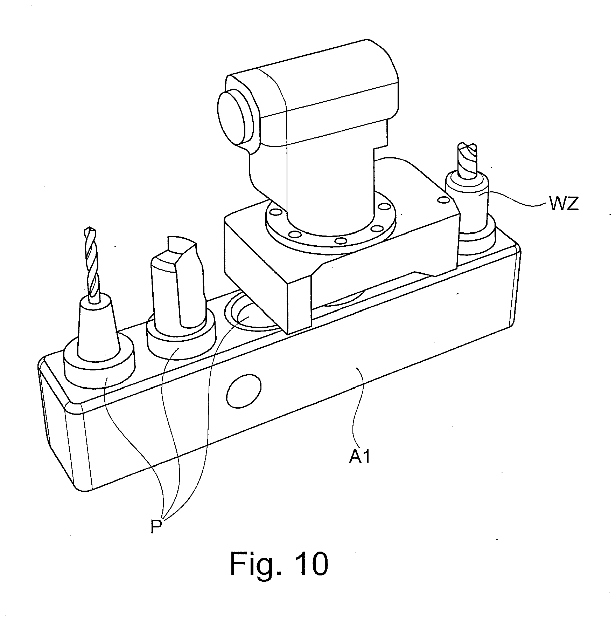

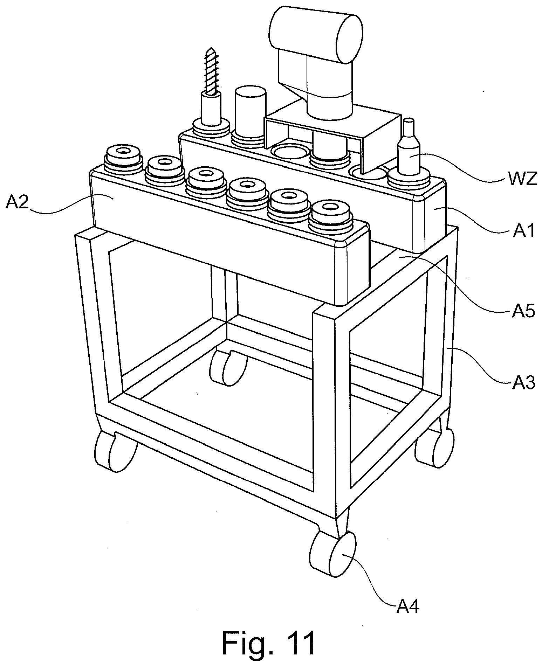

Die Werkzeugleisten können in verschiedener Weise am Werkzeugwagen A3 angeordnet werden. In den Figuren 10 und 11 sind eine Werkzeugleiste A1 sowie der Werkzeugwagen A3 mit darauf vorgesehenen Werkzeugleisten A1, A2 gezeigt. Die Werkzeugleiste A1 weist verschiedene Werkzeuge WZ auf, welche in den Aufnahmebohrungen der Werkzeugplätze P vorgesehen sind. Die Werkzeuge WZ umfassen dabei auch die Werkzeugschnittstellen, also ein Spannmittel zum Einspannen des Werkzeugs in die Spindel. In Figur 11 ist eine parallele Anordnung der Werkzeugleisten A1 und A2 dargestellt. Weiter bevorzugt können zwei parallele Leisten sowie zwei dazu orthogonale Leisten am Werkzeugwagen A3 vorgesehen sein. Der Werkzeugwagen A3 weist zudem die Räder A4 auf, welche ein leichtes manuelles Verschieben des Werkzeugwagens A3 samt Werkzeugleisten A1, A2 und der Werkzeuge WZ ermöglichen.

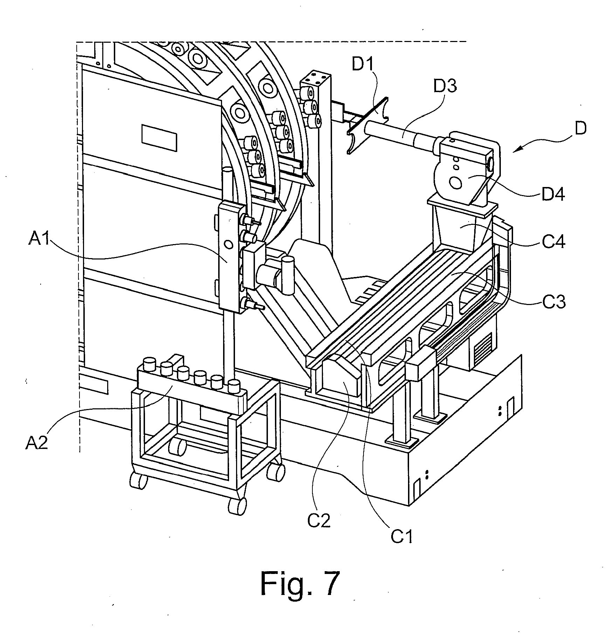

Ein Verfahren zur Eingabe von Werkzeugen in ein rotierbares Werkzeugmagazin bzw. Radmagazin einer Werkzeugmaschine kann somit die Schritte enthalten, wie sie in den Figuren 3 bis 9 dargestellt sind. Das Verfahren kann somit das Anheben der Werkzeugleiste A1 mit der Hebevorrichtung B entlang der Heberichtung B1 umfassen. Die Werkzeugleiste kann um eine Drehachse um zumindest 90° gedreht werden. Das Werkzeug WZ kann aus der angehobenen und gedrehten Werkzeugleiste vom Manipulator D über den Greifer entnommen werden. In dieser Position ist es auch möglich, über den Manipulator D Werkzeuge in die Werkzeugleiste über den Greifer einzugeben.

Zusammenfassend wird gemäß der vorliegenden Erfindung eine Zufuhrvorrichtung für ein rotierbares Werkzeugmagazin einer Werkzeugmaschine vorgeschlagen, mit der auf einfache und effiziente Weise das rotierbare Radmagazin wieder aufgefüllt werden kann. Schwere Werkzeuge müssen nun nicht mehr von Hand eingegeben werden und gleichzeitig ist eine Eingabe und Entnahme von bis zu sechs Werkzeugen gleichzeitig möglich. Zudem ermöglicht die erfindungsgemäße Zufuhrvorrichtung ein hauptzeitparalleles Rüsten. Die Anordnung der Zufuhrvorrichtung ergibt zudem eine platzsparende und kostengünstige Eingabestation für ein Radmagazin des Werkzeugmagazins.

## Patentansprüche

1. Eingabevorrichtung für ein Werkzeugmagazin (E) einer Werkzeugmaschine, insbesondere für ein Radmagazin (E) einer Werkzeugmaschine, umfassend:
- eine Werkzeugbereitstellungseinheit (A) mit einer Werkzeugleiste (A1, A2), an der zumindest ein Werkzeugplatz (P) zur Aufnahme von Werkzeugen (WZ) vorgesehen ist,
- eine Hebevorrichtung (B), die dazu eingerichtet ist, die Werkzeugleiste (A1, A2) in eine Übergabeposition (Ü) zu heben, und
- ein zumindest eine Werkzeugaufnahme aufweisenden Manipulator (D) zum Wechseln und Einlegen von Werkzeugen (WZ) am Werkzeugmagazin (E), wobei der Manipulator (D) entlang einer ersten Bewegungsrichtung in Richtung der Werkzeugbereitstellungseinheit (A) zu der Übergabeposition (Ü) bewegbar angeordnet ist;
**dadurch gekennzeichnet, dass**
die Hebevorrichtung (B) weiterhin dazu eingerichtet ist, die Werkzeugleiste (A1, A2) von einer Ausgangsstellung in eine Übergabestellung zu drehen.

2. Eingabevorrichtung nach Anspruch 1, wobei
der Manipulator (D) zum Wechseln eines Werkzeugs (WZ) dazu eingerichtet ist, in der Übergabeposition (Ü) zumindest ein Werkzeug (WZ) aus der angehobenen Werkzeugleiste (A1, A2) zu entnehmen.

3. Eingabevorrichtung nach Anspruch 1 oder 2, wobei
die Hebevorrichtung (B) ein Eingreifmittel zum Aufnehmen der Werkzeugleiste (A1, A2) aufweist und das Eingreifmittel entlang einer Heberichtung (B1) verfahrbar ist,
wobei das Eingreifmittel der Hebevorrichtung (B) zum Anheben entlang der Heberichtung (B1) in die Übergabeposition (Ü) und Drehen der Werkzeugleiste (A1, A2) von der Ausgangsstellung in die Übergabestellung eingerichtet ist und wobei bevorzugt ein gleichzeitiges Anheben und Drehen möglich ist.

4. Eingabevorrichtung nach Anspruch 3, wobei
der Werkzeugplatz (P) der Werkzeugleiste (A1, A2) ein manuell bestückbarer Werkzeugplatz (P) für bereitzustellende Werkzeuge (WZ) ist und wobei bevorzugt die Werkzeugleiste (A1, A2) lösbar an einem beweglichen Werkzeugwagen (A3) fixierbar ist,
wobei ein beweglicher Werkzeugwagen (A3) an einer Einstellposition fixierbar ist, so dass die am Werkzeugwagen (A3) vorgesehene Werkzeugleiste (A1, A2) mit dem Eingreifmittel der Hebevorrichtung (B) verbunden werden kann, zum Anheben der Werkzeugleiste (A1, A2) in die Übergabeposition (Ü).

5. Eingabevorrichtung nach zumindest einem der vorhergehenden Ansprüche, wobei
der Manipulator (D) translatorisch entlang der ersten Bewegungsrichtung und translatorisch entlang einer zweiten Bewegungsrichtung beweglich ist und bevorzugt die erste Bewegungsrichtung orthogonal zur zweiten Bewegungsrichtung verläuft,
wobei zumindest eine Bewegungsrichtung des Manipulators (D) im Wesentlichen parallel zu einer Drehachse des Werkzeugmagazins (E) verläuft,
wobei die erste und zweite Bewegungsrichtung des Manipulators (D) in einer Ebene liegen und die Heberichtung (B1) außerhalb dieser Ebene liegt,
wobei der Manipulator (D) einen ausfahrbaren Manipulatorarm (D3) aufweist der entlang der ersten Bewegungsrichtung ausfahrbar ist und wobei der Manipulator (D) entlang der zweiten Bewegungsrichtung entlang einer Verschiebeachse (C1) translatorisch beweglich ist.

6. Eingabevorrichtung nach einem der vorhergehenden Ansprüche, wobei
der Manipulator (D) einen rotierbaren Manipulatorarm (D3) aufweist, und
wobei die Werkzeugleiste (A1, A2) sechs manuell bestückbare Werkzeugplätze (P) aufweist.

7. Eingabevorrichtung nach zumindest einem der vorhergehenden Ansprüche, wobei
der Manipulator (D) zusätzlich derart verfahrbar ist um Werkzeuge (WZ) der Werkzeugleiste (A1, A2) direkt in eine Spindel der Werkzeugmaschine einzuwechseln.

8. Eingabevorrichtung nach zumindest einem der vorhergehenden Ansprüche, wobei
ein Identifizierungssystem vorgesehen ist, zum Identifizieren der Werkzeuge (WZ), wobei bevorzugt ein lesen/schreiben der Werkzeugdaten der Werkzeuge in der Übergabeposition (Ü) stattfindet, vor der Entnahme des Werkzeugs aus der Werkzeugleiste (A1, A2),
wobei das Identifizierungssystem die in der Werkezugleiste (A1, A2) aufgenommenen Werkzeuge (WZ) automatisch identifiziert.

9. Eingabevorrichtung nach zumindest einem der vorhergehenden Ansprüche, wobei
die Werkzeuge (WZ) gespeicherte Werkzeugdaten aufweisen und die Hebevorrichtung (B) zum Lesen/Schreiben der Werkzeugdaten die Werkzeugleiste (A1, A2) in eine vordefinierte Position anhebt und/oder dreht.

10. Eingabevorrichtung nach zumindest einem der vorhergehenden Ansprüche, wobei
der Manipulator (D) zumindest einen Greifer aufweist zum Eingreifen an einer Werkzeugschnittstelle eines Werkzeugs (WZ), und die Werkzeugaufnahme des Manipulators (D) um eine Drehachse drehbar ist.

11. Werkzeugmaschine mit einem Werkzeugmagazin, insbesondere mit einem Radmagazin, und einer Eingabevorrichtung nach einem der vorhergehenden Ansprüche.

12. Verfahren zum Wechseln von Werkzeugen eines Werkzeugmagazins, insbesondere Radmagazins einer Werkzeugmaschine, mittels einer Eingabevorrichtung nach zumindest einem der vorhergehenden Ansprüche, umfassend die Schritte:
- Heben der Werkzeugleiste (A1, A2) in eine Übergabeposition (Ü);
- Drehen der Werkzeugleiste (A1, A2) von einer Ausgangsstellung in eine Übergabestellung;
- Eingabe oder Entnahme eines Werkzeugs (WZ) aus der in der Übergabeposition (Ü) in Übergabestellung befindlichen Werkzeugleiste (A1, A2) durch den Manipulator (D); und
- Bewegen des Manipulators (D) entlang der ersten Bewegungsrichtung zum Ein-/Auswechseln des Werkzeugs (WZ) in das Werkzeugmagazin (E).

## Claims

1. An input device for a tool magazine (E) of a machine tool, in particular for a wheel magazine (E) of a machine tool, comprising:
- a tool supplying unit (A) having a tool bar (A1, A2) at which at least one tool space (P) for receiving tools (WZ) is provided,
- a lifting device (B) configured to lift said tool bar (A1, A2) into a transfer position (Ü), and
- a manipulator (D) for changing and inserting tools (WZ) on said tool magazine (E), wherein said manipulator (D) has at least one tool holder and is arranged so as to be movable along a first movement direction, in the direction of said tool supplying unit (A), to the transfer position (Ü);
**characterized in that**
said lifting device (B) is further configured to rotate said tool bar (A1, A2) from an initial attitude to a transfer attitude.

2. The input device according to claim 1, wherein
said manipulator (D), for changing a tool (WZ), is configured to remove at least one tool (WZ) from the lifted tool bar (A1, A2) in the transfer position (Ü).

3. The input device according to claim 1 or 2, wherein
said lifting device (B) includes an engagement means for receiving said tool bar (A1, A2) and said engagement means is movable along a lifting direction (B1),
wherein said engagement means of said lifting device (B) is configured for lifting along the lifting direction (B1) to the transfer position (Ü) and rotating said tool bar (A1, A2) from the initial attitude into the transfer attitude, simultaneous lifting and rotating being preferably possible.

4. The input device according to claim 3, wherein
said tool space (P) of said tool bar (A1, A2) is a manually loadable tool space (P) for tools (WZ) to be supplied and said tool bar (A1, A2) can preferably be fixed detachably on a movable tool carriage (A3),
wherein a movable tool carriage (A3) can be fixed at a setting position so that said tool bar (A1, A2) provided on said tool carriage (A3) can be connected to said engagement means of said lifting device (B) for lifting said tool bar (A1, A2) into the transfer position (Ü).

5. The input device according to at least one of the preceding claims, wherein
said manipulator (D) is movable translationally along the first movement direction and translationally along a second movement direction, the first movement direction extending preferably orthogonally with respect to the second movement direction,
wherein at least one movement direction of said manipulator (D) substantially extends in parallel to a rotational axis of said tool magazine (E),
wherein the first and second movement directions of said manipulator (D) lie in one plane and the lifting direction (B1) lies outside said plane,
wherein said manipulator (D) has an extendable manipulator arm (D3) which can be extended along the first movement direction and wherein said manipulator (D) is movable translationally along the second movement direction along a displacement axis (C1).

6. The input device according to one of the preceding claims, wherein
said manipulator (D) has a rotatable manipulator arm (D3), and
wherein said tool bar (A1, A2) has six manually loadable tool spaces (P).

7. The input device according to at least one of the preceding claims, wherein
said manipulator (D) is also movable in such a way that tools (WZ) on said tool bar (A1, A2) can be inserted directly into a spindle of said machine tool.

8. The input device according to at least one of the preceding claims, wherein
an identification system for identifying the tools (WZ) is provided, wherein the tool data of the tools are preferably read/written in the transfer position (Ü) before the tool is removed from said tool bar (A1, A2),
wherein the identification system automatically identifies the tools (WZ) received in said tool bar (A1, A2).

9. The input device according to at least one of the preceding claims, wherein
the tools (WZ) have stored tool data and said lifting device (B) lifts and/or rotates said tool bar (A1, A2) to a predefined position for reading/writing the tool data.

10. The input device according to at least one of the preceding claims, wherein
said manipulator (D) includes at least one gripper for engaging at a tool interface of a tool (WZ), and said tool holder of said manipulator (D) is rotatable about a rotational axis.

11. A machine tool including a tool magazine, in particular with a wheel magazine, and an input device according to one of the preceding claims.

12. A method for changing tools in a tool magazine, in particular a wheel magazine of a machine tool, by means of an input device according to at least one of the preceding claims, comprising the steps of:
- lifting said tool bar (A1, A2) to a transfer position (Ü);
- rotating said tool bar (A1, A2) from an initial attitude to a transfer attitude;
- inputting or removing a tool (WZ) from said tool bar (A1, A2) arranged in the transfer position (Ü) in transfer attitude by means of said manipulator (D); and
- moving said manipulator (D) along the first movement direction for inserting/removing the tool (WZ) into/from said tool magazine (E).

## Revendications

1. Dispositif d'entrée pour un magasin à outils (E) d'une machine-outil, en particulier pour un magasin à roues (E) d'une machine-outil, comprenant :
- une unité de mise à disposition d'outils (A) avec une barre à outils (A1, A2) au niveau de laquelle est prévu au moins un emplacement d'outil (P) pour la réception d'outils (WZ),
- un dispositif de levage (B) qui est conçu pour soulever la barre à outils (A1, A2) jusque dans une position de transfert (Ü), et
- un manipulateur (D) présentant au moins une réception d'outil pour l'échange et l'insertion d'outils (WZ) au niveau du magasin à outils (E), dans lequel le manipulateur (D) est agencé de façon à pouvoir être déplacé dans une première direction de déplacement dans la direction de l'unité de mise à disposition d'outils (A) vers la position de transfert (Ü) ;
**caractérisé en ce que**
le dispositif de levage (B) est en outre conçu pour faire tourner la barre à outils (A1, A2) d'une situation de sortie jusque dans une situation de transfert.

2. Dispositif d'entrée selon la revendication 1, dans lequel
le manipulateur (D) est conçu, pour l'échange d'un outil (WZ), pour prélever dans la position de transfert (Ü) au moins un outil (WZ) hors de la barre à outils (A1, A2) soulevée.

3. Dispositif d'entrée selon la revendication 1 ou 2, dans lequel
le dispositif de levage (B) présente un moyen de préhension pour la réception de la barre à outils (A1, A2) et le moyen de préhension peut être déplacé dans une direction de levage (B1),
dans lequel le moyen de préhension du dispositif de levage (B) est conçu pour un levage dans la direction de levage (B1) jusque dans la position de transfert (Ü) et pour une rotation de la barre à outils (A1, A2) de la situation de sortie jusque dans la situation de transfert, et dans lequel il est de préférence possible d'effectuer un levage et une rotation simultanés.

4. Dispositif d'entrée selon la revendication 3, dans lequel
l'emplacement d'outil (P) de la barre à outils (A1, A2) est un emplacement d'outil (P) qui peut être garni manuellement pour des outils (WZ) à mettre à disposition et dans lequel de préférence la barre à outils (A1, A2) peut être fixée de façon amovible au niveau d'un chariot à outils (A3) mobile,
dans lequel un chariot à outils (A3) mobile peut être fixé au niveau d'une position de réglage de sorte que la barre à outils (A1, A2) prévue au niveau du chariot à outils (A3) puisse être reliée au moyen de préhension du dispositif de levage (B), pour un levage de la barre à outils (A1, A2) jusque dans la position de transfert (Ü).

5. Dispositif d'entrée selon au moins l'une des revendications précédentes, dans lequel
le manipulateur (D) est mobile en translation dans la première direction de déplacement et en translation dans une seconde direction de déplacement et la première direction de déplacement se déroule de préférence à la perpendiculaire de la seconde direction de déplacement,
dans lequel au moins une direction de déplacement du manipulateur (D) se déroule essentiellement en parallèle d'un axe de rotation du magasin à outils (E),
dans lequel la première et la seconde direction de déplacement du manipulateur (D) se situent dans un plan et la direction de levage (B1) se situe à l'extérieur de ce plan,
dans lequel le manipulateur (D) présente un bras de manipulateur (D3) déployable qui peut être déployé dans la première direction de déplacement, et dans lequel le manipulateur (D) est mobile en translation dans la seconde direction de déplacement le long d'un axe de décalage (C1).

6. Dispositif d'entrée selon l'une des revendications précédentes, dans lequel
le manipulateur (D) présente un bras de manipulateur (D3) qui peut être mis en rotation, et
dans lequel la barre à outils (A1, A2) présente six emplacements d'outil (P) qui peuvent être garnis manuellement.

7. Dispositif d'entrée selon au moins l'une des revendications précédentes, dans lequel
le manipulateur (D) peut en outre être déplacé de sorte que des outils (WZ) de la barre à outils (A1, A2) soient échangés directement dans une broche de la machine-outil.

8. Dispositif d'entrée selon au moins l'une des revendications précédentes, dans lequel
un système d'identification est prévu pour l'identification des outils (WZ), dans lequel une lecture/écriture des données d'outil des outils a lieu de préférence dans la position de transfert (Ü), avant le prélèvement de l'outil hors de la barre à outils (A1, A2),
dans lequel le système d'identification identifie automatiquement les outils (WZ) reçus dans la barre à outils (A1, A2).

9. Dispositif d'entrée selon au moins l'une des revendications précédentes, dans lequel
les outils (WZ) présentent des données d'outil mémorisées et le dispositif de levage (B) soulève et/ou fait tourner la barre à outils (A1, A2) dans une position prédéfinie pour la lecture/écriture des données d'outil.

10. Dispositif d'entrée selon au moins l'une des revendications précédentes, dans lequel
le manipulateur (D) présente au moins un élément de préhension pour intervenir au niveau d'une interface d'outil d'un outil (WZ), et la réception d'outil du manipulateur (D) peut être tournée autour d'un axe de rotation.

11. Machine-outil avec un magasin à outils, en particulier avec un magasin à roues, et un dispositif d'entrée selon l'une des revendications précédentes.

12. Procédé destiné à l'échange d'outils d'un magasin à outils, en particulier d'un magasin à roues d'une machine-outil, au moyen d'un dispositif d'entrée selon au moins l'une des revendications précédentes, comprenant les étapes consistant à :
- soulever la barre à outils (A1, A2) jusque dans une position de transfert (Ü) ;
- faire tourner la barre à outils (A1, A2) d'une situation de sortie jusque dans une situation de transfert ;
- entrer ou prélever, par le manipulateur (D), un outil (WZ) dans la position de transfert (Ü) hors de la barre à outils (A1, A2) se trouvant dans une situation de transfert ; et
- déplacer le manipulateur (D) dans la première direction de déplacement pour échanger l'outil (WZ) en le faisant entrer dans le ou sortir du magasin à outils (E).
